# EUROPÄISCHE PATENTANMELDUNG

(11) **EP 1 477 372 A1**
(43) Veröffentlichungstag der Anmeldung: **17.11.2004**
(21) Anmeldenummer: 03010828.6
(22) Anmeldetag: 14.05.2003
(51) Int. Cl.: B60R 21/16

(54) **Sicherheitseinrichtung**

(71) Anmelder: Delphi Technologies, Inc., Troy, MI 48007 (US)
(72) Erfinder: Guthke, Detlev, 58089 Hagen (DE); Maiwald, Helmut, 51515 Kürten (DE)
(74) Vertreter: Manitz, Finsterwald & Partner GbR

(57) **Zusammenfassung**

Eine Sicherheitseinrichtung weist einen Luftsack auf, der zumindest eine schlauchartige Kammer aufweist, wobei eine Vorspanneinrichtung vorgesehen ist, welche die Kammer in einem entfalteten Zustand vorspannt.

## Beschreibung

Die vorliegende Erfindung betrifft eine Sicherheitseinrichtung für Fahrzeuginsassen mit einem von einem Gasgenerator befüllbaren Luftsack, der zumindest eine im Wesentlichen schlauchartige Kammer aufweist.

Grundsätzlich ist es bei derartigen Sicherheitseinrichtungen wünschenswert, dass das Entfaltungsverhalten derart gewählt ist, dass eine ungewünschte Kollision mit einem Fahrzeuginsassen auch dann ausgeschlossen ist, wenn sich dieser nicht in seiner üblichen Sitzposition befindet. Es ist deshalb grundsätzlich wünschenswert, wenn sich der Luftsack anfangs quer zu seiner Hauptentfaltungsrichtung ausbreitet und sich erst danach in Richtung des Fahrzeuginsassen aufbläht, um ein Aufprallpolster zu bilden.

Ferner ist es wünschenswert, wenn die für das vollständige Entfalten und Aufblähen des Luftsacks erforderliche Gasmenge möglichst gering ist, da hierdurch die Größe und die Herstellungskosten des erforderlichen Gasgenerators gering gehalten werden können. Insbesondere bei Luftsäcken für einen Seitenaufprallschutz, die sich großflächig innerhalb eines Fahrzeugs erstrecken, ist die Anforderung nach einer geringen Gasfüllmenge besonders bedeutend.

Es ist die Aufgabe der vorliegenden Erfindung, eine Sicherheitseinrichtung der eingangs genannten Art zu schaffen, die zur Befüllung ein geringes Gasvolumen benötigt und dennoch einen guten Aufprallschutz bietet.

Die Lösung dieser Aufgabe erfolgt durch die Merkmale des Anspruchs 1 und insbesondere dadurch, dass der Luftsack eine passive Vorspanneinrichtung aufweist, die nur am Luftsack, jedoch nicht am Fahrzeug befestigt ist, wobei die Vorspanneinrichtung die schlauchartige Kammer in einem entfalteten und mit Gas beaufschlagten Zustand auf eine gekrümmte Bahn zwingt.

Erfindungsgemäß wird zumindest eine schlauchartige Kammer vorgesehen, die geometriebedingt nur eine relativ geringe Menge an Füllgas benötigt. Um jedoch trotz einer nur schlauchartigen Kammer einen ausreichenden Insassenschutz zu ermöglichen, bewirkt die passive Vorspanneinrichtung in der Endphase der Entfaltung des Luftsacks ein Krümmen der Kammer, so dass sich ein vergrößertes wirksames Volumen ergibt, das dem Insassen als Polster dient. Gleichzeitig ist bei der erfindungsgemäßen Sicherheitseinrichtung gewährleistet, dass sich der Luftsack zunächst in eine Richtung entfaltet, die nicht in Richtung des Fahrzeuginsassen sondern im Wesentlichen quer dazu weist. Erst wenn sich die schlauchartige Kammer entfaltet hat und aufzublähen beginnt, wird die Vorspanneinrichtung wirksam, die eine Vergrößerung des effektiven Volumens der Sicherheitseinrichtung und damit der effektiven Breite in Richtung des Fahrzeuginsassen bewirkt.

Die erfindungsgemäße Sicherheitseinrichtung ermöglicht ein außerordentlich schnelles Entfalten des Luftsacks, da nur geringe Volumina mit Gas befüllt werden müssen.

Vorteilhafte Ausführungsformen der Erfindung sind in der Beschreibung, der Zeichnung sowie den Unteransprüchen beschrieben.

Nach einer ersten vorteilhaften Ausführungsform kann die Kammer in Entfaltungsrichtung des Luftsackes verlaufen. Eine solche Anordnung ist bei einem Einsatz der Sicherheitseinrichtung als Seitenaufprallschutz vorteilhaft, da in diesem Fall die Sicherheitseinrichtung im Himmel des Fahrzeugs angeordnet werden kann, so dass sich die schlauchartige Kammer beim Entfalten des Luftsacks zunächst im Wesentlichen vertikal nach unten entfaltet. Erst wenn die Kammer sich nahezu vollständig entfaltet hat, wird die Vorspanneinrichtung wirksam, welche der Kammer die gekrümmte'Form auferlegt.

Nach einer weiteren vorteilhaften Ausführungsform können mehrere parallel beabstandete Kammern vorgesehen sein, die durch eine oder mehrere im Wesentlichen quer zu den Kammern verlaufende Verbindungskammern miteinander verbunden sind. Hierbei ist es vorteilhaft, wenn zwischen benachbarten schlauchartigen Kammern eine Materiallage vorgesehen ist, da hierdurch ein weiterer Aufprallschutz für den Fahrzeuginsassen hergestellt ist. Durch eine solche Materiallage zwischen zwei benachbarten Schlauchkammern ist einerseits sichergestellt, dass keine Körperteile des Fahrzeuginsassen aus dem Fahrzeug heraus gelangen können. Andererseits ist durch diese Materiallage ein zusätzlicher Aufprallschutz gegeben, insbesondere wenn die Materiallage nicht nur mit den schlauchförmigen Kammern sondern auch mit den Verbindungskammern verbunden ist, da in diesem Fall die Materiallage gleichmäßig und bogenförmig zwischen allen sie umgebenden Kammern gespannt wird, wenn die Vorspanneinrichtung wirksam wird.

Eine weitere vorteilhafte Ausführungsform ist dadurch gegeben, dass die Vorspanneinrichtung als flächige Materiallage ausgebildet wird, die nicht notwendigerweise öffnungsfrei ausgebildet sein muss. Durch eine solche flächige Materiallage ergibt sich eine gleichmäßige Spannwirkung entlang des gesamten Luftsacks. Alternativ ist es auch möglich, die passive Vorspanneinrichtung als Band oder dergleichen auszubilden.

Nach einer weiteren vorteilhaften Ausführungsform kann zwischen der Vorspanneinrichtung und einer Lage des Luftsacks eine Spannkammer gebildet sein, die nicht mit der schlauchförmigen Kammer kommuniziert. Eine solche Sicherheitseinrichtung ist besonders eigensteif, was beispielsweise bei Unfallsituation mit einem Überschlag (roll over) vorteilhaft ist.

Beim Entfalten des Luftsacks kann die Spannkammer entweder vom Gasgenerator mit Gas beaufschlagt werden, damit in der Spannkammer beim Entfalten des Luftsacks kein Unterdruck entsteht. Hierzu kann es vorteilhaft sein, am Luftsack ein Füllventil vorzusehen. Alternativ oder zusätzlich kann die Spannkammer eine oder mehrere Einströmöffnungen aufweisen, damit beim Entfalten Umgebungsluft in die Spannkammer eindringen kann, so dass ein rasches Entfalten des Luftsackes nicht behindert wird. Auch hier kann es vorteilhaft sein, in den Einströmöffnungen Rückströmventile vorzusehen.

Ein für die oben beschriebene Sicherheitseinrichtung besonders vorteilhafter Luftsack weist ein erstes und ein zweites System parallel beabstandeter Kammern auf, wobei die Kammern des ersten und des zweiten Systems einander überlappen. Bei dieser Ausführungsform eines Luftsacks ist sichergestellt, dass im Bereich der Kammern stets eine ausreichende Dicke des Luftsacks vorhanden ist, da auch im Bereich zwischen zwei benachbarten Kammern eines Systems die überlappende Kammer des zweiten Systems ein Schutzvolumen bildet. Neben einem guten Schutz zeichnet sich ein solcher Luftsack auch dadurch aus, dass er einen Schutz für den Fahrzeuginsassen auch dann bietet, wenn sich dieser nicht in seiner normalen Sitzposition befindet, da der Luftsack im Bereich der Kammern keine Stelle aufweist, die kein Schutzvolumen bieten würde.

Nach einer vorteilhaften Weiterbildung können im Querschnitt gesehen Kammern des einen Systems mit ihrem Mittelpunkt etwa in der Mitte zwischen zwei benachbarten Kammern des andern Systems angeordnet sein. Hierdurch ergibt sich eine gleichmäßige Kammerstruktur mit hoher Eigensteifigkeit, die auch in der Herstellung günstig ist.

An dieser Stelle sei bemerkt, dass es je nach Anwendungsfall auch ausreichend sein kann, wenn die oben beschriebene Kammerstruktur nur in bestimmten Bereichen des Luftsacks vorgesehen ist. Auch muss die Kontur des Zweikammersystems im Querschnitt gesehen nicht notwendigerweise symmetrisch sein, wodurch bestimmte Bereiche der Sicherheitseinrichtung gezielt an den jeweiligen Anwendungsfall angepasst werden können.

Eine besonders kostengünstige Herstellung ergibt sich, wenn beide Systeme eine gemeinsame Wand aufweisen. In diesem Fall kann es vorteilhaft sein, die beiden Systeme durch drei Materiallagen zu bilden, die an Verbindungsabschnitten miteinander verbunden sind. Beispielsweise können die beiden Systeme paralleler Kammern durch zwei äußere und eine dazwischen liegende Materiallage gebildet werden, wobei die mittlere Materiallage abwechselnd mit der einen und der anderen äußeren Materiallage verbunden ist. Die Verbindung kann hierbei durch Kleben, Verschweißen oder Vernähen gebildet sein. Alternativ ist es möglich, sämtliche drei Lagen miteinander zu verweben, beispielsweise mittels der Jacquard-Technik.

Nach einer weiteren Ausbildung der Erfindung können die Verbindungen der Materiallagen mit unterschiedlicher Festigkeit gewählt werden, so dass beispielsweise oberhalb eines vorbestimmten Druckes ausgewählte Verbindungen aufreißen, so dass der Innendruck verringert und die im Randbereich liegenden Verbindungen geschont werden.

Nach einer weiteren Ausführungsform der Erfindung ist es möglich, dass einzelne Kammern nicht mit den übrigen Kammern kommunizieren sondern beim Entfalten mit Umgebungsluft gefüllt werden. Zu diesem Zweck können Einströmöffnungen vorgesehen sein, die beispielsweise mit einem Rückströmventil versehen sind.

Nachfolgend wird die vorliegende Erfindung beispielhaft anhand vorteilhafter Ausführungsformen und unter Bezugnahme auf die beigefügten Zeichnungen beschrieben. Es zeigen:
- Fig. 1: eine Seitenansicht einer ersten Ausführungsform einer Sicherheitseinrichtung im mit Gas beaufschlagten Zustand;
- Fig. 2A: eine Querschnittsansicht entlang der Schnittlinie A-A von Fig. 1;
- Fig. 2B: eine Querschnittsansicht entlang der Schnittlinie B-B von Fig. 1;
- Fig. 3: eine perspektivische Seitenansicht auf die Rückseite der Sicherheitseinrichtung von Fig. 1;
- Fig. 4: eine perspektivische Seitenansicht auf die Vorderseite des Luftsacks von Fig. 1;
- Fig. 5: eine geschnittene perspektivische Ansicht auf einen Luftsack; und
- Fig. 6: eine Querschnittsansicht der Materiallagen des Luftsacks von Fig. 5 vor einem Herstellen der schlauchartigen Kammern.

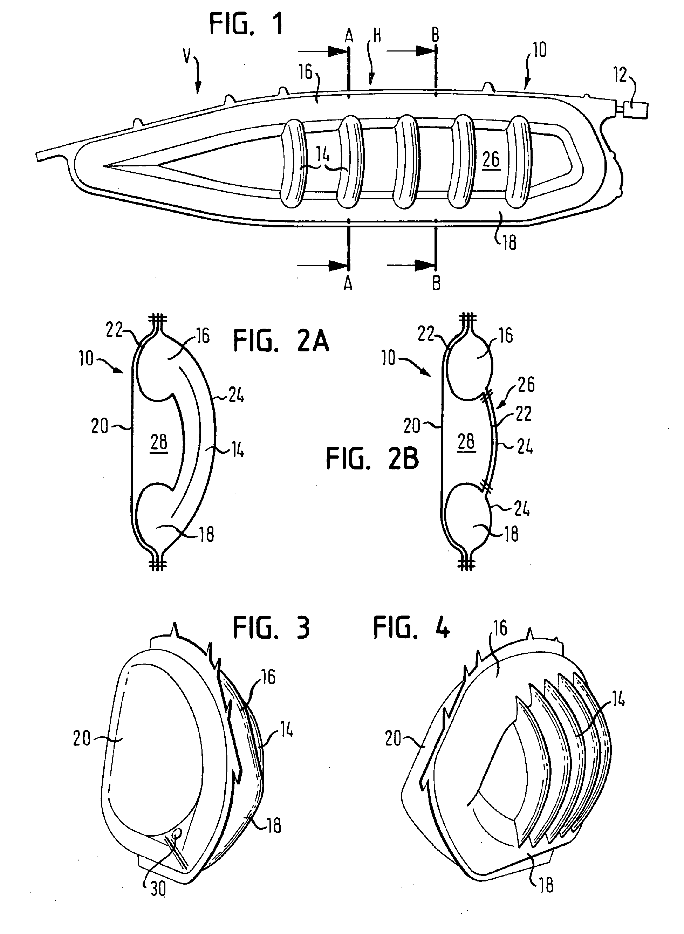

Fig. 1 zeigt eine Sicherheitseinrichtung für Fahrzeuginsassen mit einem Luftsack 10, der von einem Gasgenerator 12 befüllbar ist. Bei dem dargestellten Ausführungsbeispiel ist der Luftsack zum Schutz gegen Seitenaufprall ausgebildet und erstreckt sich innerhalb eines Fahrzeugs von der A-Säule bis zur C-Säule.

Der Luftsack 10 weist mehrere, beim dargestellten Ausführungsbeispiel insgesamt fünf, schlauchartige Kammern 14 auf, die parallel zueinander verlaufen. Die schlauchartigen Kammern 14 kommunizieren mit zwei sich in Längsrichtung des Luftsacks erstreckenden Verbindungskammern 16 und 18, wobei die Verbindungskammern 16 und 18 sowohl am vorderen als auch am hinteren Ende des Luftsacks miteinander in Verbindung stehen können, jedoch nicht müssen.

In einem vorderen Abschnitt V laufen die beiden Verbindungskammern 16 und 18 V-förmig aufeinander zu, wobei sich in diesem Abschnitt keine schlauchartigen Kammern 14 befinden. Der vordere Abschnitt V geht in einen Hauptabschnitt H über, in dem die beiden Verbindungskammern 16 und 18 annähernd parallel zueinander verlaufen, wobei sich zwischen den beiden Verbindungskammern 16 und 18 die einzelnen, parallel zueinander verlaufenden schlauchartigen Kammern 14 erstrecken.

Die Fig. 2A und 2B zeigen jeweils Querschnitte durch den Luftsack 10 von Fig. 1. Wie zu erkennen ist, ist an der Rückseite des Luftsackes 10 eine passive Vorspanneinrichtung 20 vorgesehen, welche die schlauchartigen Kammern 14 des Luftsacks 10 auf eine gekrümmte Bahn zwingt. Wie die Fig. 2A und 2B zeigen, sind die Kammern 14, 16 und 18 des Luftsacks durch insgesamt zwei Luftsacklagen 22 und 24 gebildet, die durch entsprechende, mit einem Doppelstrich angedeutete Verbindungen beispielsweise durch Vernähen, Verkleben oder Verschweißen aneinander gekoppelt sind. Somit bilden die beiden Luftsacklagen 22 und 24 im Bereich einer schlauchartigen Kammer 14 einen mit Gas befüllbaren Hohlraum, wohingegen die beiden Luftsacklagen 22 und 24 im Bereich zwischen zwei Kammern 14 (und zwischen der oberen und der unteren Verbindungskammer 16 und 18) eine Materiallage 26 bilden, die nicht mit Gas befüllt ist, jedoch optional durch Beipässe segmentweise befüllt werden kann.

Die Vorspanneinrichtung 20 ist bei dem dargestellten Ausführungsbeispiel durch eine flächige Materiallage in Form einer Membran gebildet, die über den gesamten Außenumfang des Luftsackes 10 mit den beiden Luftsacklagen 22 und 24 verbunden ist. Hierdurch ist zwischen der hinteren Luftsacklage 22 und der Vorspannmembran 20 eine Vorspannkammer 28 gebildet. Diese Vorspannkammer 28 kann beispielsweise durch eine Einströmöffnung 30 (Fig. 3) mit Umgebungsluft befüllt werden, wenn sich der Luftsack entfaltet, damit in der Vorspannkammer 28 kein Unterdruck entsteht.

Beim Befüllen des Luftsacks 10 mit Hilfe des Gasgenerators 12 strömt zunächst Gas unter Druck in die Verbindungskammer 16 und entsprechend der Kammerquerschnitte in die Kammern 14 und 18. Wenn sich der Luftsack etwas mit Gas gefüllt hat, entfaltet sich dieser im Wesentlichen vertikal von oben nach unten ausgehend von einer Montage im Dachhimmel des Fahrzeugs. Wäre die Vorspanneinrichtung 20 nicht vorhanden, so würden sich die schlauchartigen Kammern 14 im Wesentlichen säulenartig vertikal nach unten entfalten. Aufgrund der vorgesehenen Vorspanneinrichtung 20, die in vertikaler Richtung kürzer als die vordere Luftsacklage 24 ist, werden jedoch die schlauchartigen Kammern 14 auf eine gekrümmte Bahn gezwungen, wie dies insbesondere in Fig. 2A erkennbar ist. Die zwischen den schlauchartigen Kammern 14 verlaufenden Materiallagen 26 verlaufen ebenfalls gekrümmt.

An dieser Stelle sei bemerkt, dass die Vorspannkammer 28 nach einer vorteilhaften Ausführungsform zwar unterstützend von dem Gasgenerator 12 mit Gas versorgt werden kann. Grundsätzlich muss die Vorspannkammer 28 jedoch nicht mit Druckgas gefüllt sein. Für einen besonders effektiven Insassenschutz ist es jedoch vorteilhaft, wenn die Vorspannkammer 28 druckdicht ausgebildet ist.

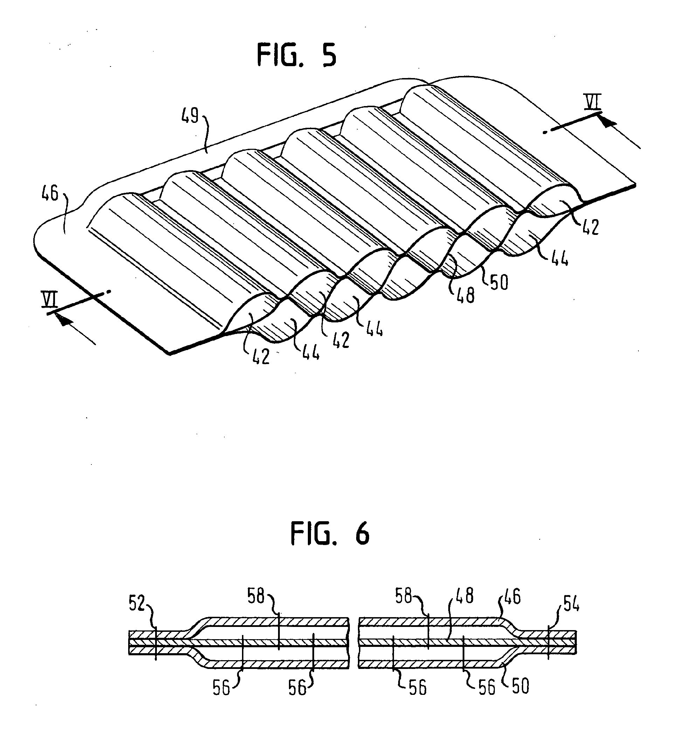

Die Fig. 5 und 6 zeigen einen Ausschnitt aus einem Luftsack, der sich besonders für die Sicherheitseinrichtung der oben beschriebenen Art eignet, jedoch nicht auf eine solche Sicherheitseinrichtung beschränkt ist.

In dem in den Fig. 5 und 6 ausschnittsweise dargestellten Luftsack ist ein erstes und ein zweites System parallel beabstandeter Kammern vorgesehen, wobei die Kammern des ersten und des zweiten Systems einander überlappen. Das erste System weist bei dem dargestellten Ausführungsbeispiel sechs benachbarte und parallel beabstandete, schlauchartige Kammern 42 auf, wohingegen das zweite System fünf parallel beabstandete und schlauchartige Kammern 44 aufweist. Die Kammern 42 und 44 des ersten und des zweiten Systems überlappen einander, wobei im Querschnitt gesehen die Kammern des einen Systems mit ihrem Mittelpunkt etwa in der Mitte zwischen zwei benachbarten Kammern des anderen Systems angeordnet sind.

Wie insbesondere Fig. 6 zeigt, sind die beiden Systeme durch insgesamt zwei äußere Materiallagen 46 und 50 und eine mittlere Materiallage 48 gebildet, die im Bereich der Außenränder durch Verbindungen 52 und 54 miteinander verbunden sind. Die Verbindung kann beispielsweise durch Nähen, Kleben oder Schweißen erfolgen.

Um die Kammern 42 und 44 der beiden Systeme zu bilden, ist die mittlere Materiallage 48 abwechselnd mit der äußeren Materiallage 46 und der äußeren Materiallage 50 verbunden, wobei in Fig. 6 die Verbindungen nur angedeutet, jedoch noch nicht vollzogen sind. Somit wechseln sich bei der Schnittansicht von Fig. 6 Verbindungsabschnitte 56 mit Verbindungsabschnitten 58 ab, wobei die Verbindungsabschnitte 56 die mittlere Materiallage 48 mit der äußeren Materiallage 50 und die Verbindungsabschnitte 58 die mittlere Materiallage 48 mit der äußeren Materiallage 46 verbinden. Nach Durchführen der Verbindungen ergibt sich die in Fig. 5 dargestellte Form, wobei sämtliche Kammern 42 und 44 über eine sich quer zu den Kammern erstreckende Verbindungskammer 49 miteinander kommunizieren. Alternativ können eine oder mehrere der Kammern 42 und 44 an ihrem Ende geschlossen sein, um eine erhöhte Steifigkeit in ausgewählten Bereichen zu ermöglichen. Auch müssen nicht sämtliche Kammern miteinander kommunizieren. Vielmehr können auch ausgewählte Bereiche mit Kammern versehen sein, die nicht von dem Gasgenerator sondern durch Umgebungsluft beim Entfalten gefüllt werden.

Die Materiallagen 46 und 50 können beschichtet sein, wobei die Materiallage 48 unbeschichtet sein kann.

### Bezugszeichenliste

- 10: Luftsack
- 12: Gasgenerator
- 14: schlauchartige Kammern
- 16, 18: Verbindungskammer
- 20: Vorspanneinrichtung
- 22, 24: Luftsacklage
- 26: Materiallage
- 28: Vorspannkammer
- 30: Einströmöffnung
- 42: Kammern des ersten Systems
- 44: Kammern des zweiten Systems
- 46: äußere Materiallage
- 48: mittlere Materiallage
- 49: Verbindungskammer
- 50: äußere Materiallage
- 52, 54: Randverbindungen
- 56: Verbindungsabschnitte des zweiten Systems
- 58: Verbindungsabschnitte des ersten Systems

- H: Hauptabschnitt
- V: vorderer Abschnitt

## Patentansprüche

1. Sicherheitseinrichtung für Fahrzeuginsassen, mit einem von einem Gasgenerator (12) befüllbaren Luftsack (10), der zumindest eine im wesentlichen schlauchartige Kammer (14) aufweist, und mit einer nur am Luftsack (10), jedoch nicht am Fahrzeug befestigten passiven Vorspanneinrichtung (20), welche die Kammer (14) in einem entfalteten und mit Gas beaufschlagten Zustand auf eine gekrümmte Bahn zwingt.

2. Sicherheitseinrichtung nach Anspruch 1,
**dadurch gekennzeichnet, dass**
die Kammer (14) in Entfaltungsrichtung des Luftsacks (10) verläuft.

3. Sicherheitseinrichtung nach Anspruch 1,
**dadurch gekennzeichnet, dass**
mehrere parallel beabstandete Kammern (14) vorgesehen sind, die durch zumindest eine im Wesentlichen quer zu diesen verlaufende Verbindungskammer (16, 18) miteinander verbunden sind, wobei insbesondere zwischen benachbarten Kammern (14; 16, 18) eine Materiallage (26) vorgesehen ist.

4. Sicherheitseinrichtung nach Anspruch 1,
**dadurch gekennzeichnet, dass**
die Vorspanneinrichtung eine flächige Materiallage (20) ist.

5. Sicherheitseinrichtung nach Anspruch 1,
**dadurch gekennzeichnet, dass**
zwischen der Vorspanneinrichtung (20) und einer Luftsacklage (22) eine nicht mit der Kammer kommunizierende Spannkammer (28) gebildet ist.

6. Sicherheitseinrichtung nach Anspruch 1,
**dadurch gekennzeichnet, dass**
die Spannkammer (28) beim Füllen des Luftsacks (10) insbesondere über ein am Luftsack vorgesehenes Ventil von dem Gasgenerator (12) mit Gas befüllbar ist, und/oder dass die Spannkammer (28) zumindest eine insbesondere mit einem Rückströmventil versehene Einströmöffnung (30) aufweist, um beim Entfalten ein Einströmen von Umgebungsluft in die Spannkammer (28) zu ermöglichen.

7. Luftsack, insbesondere für eine Sicherheitseinrichtung nach einem der vorstehenden Ansprüche, mit einem ersten und einem zweiten System parallel beabstandeter Kammern (42, 44), wobei die Kammern des ersten und des zweiten Systems einander überlappen.

8. Luftsack nach Anspruch 7,
**dadurch gekennzeichnet, dass**
im Querschnitt gesehen Kammern (42) des einen Systems mit ihrem Mittelpunkt etwa in der Mitte zwischen zwei benachbarten Kammern (44) des anderen Systems angeordnet sind.

9. Luftsack nach Anspruch 7,
**dadurch gekennzeichnet, dass**
beide Systeme eine gemeinsame Wand (48) aufweisen.

10. Luftsack nach Anspruch 7,
**dadurch gekennzeichnet, dass**
die beiden Systeme durch drei Materiallagen (46, 48, 50) gebildet sind, die an Verbindungsabschnitten (52, 54, 56, 58) miteinander verbunden sind.

11. Luftsack nach Anspruch 7,
**dadurch gekennzeichnet, dass**
die beiden Systeme durch zwei äußere (46, 50) und eine dazwischen liegende Materiallage (48) gebildet sind, wobei die mittlere Materiallage (48) abwechselnd mit der einen und der anderen äußeren Materiallage verbunden ist.

12. Luftsack nach Anspruch 7,
**dadurch gekennzeichnet, dass**
die beiden Systeme durch drei Materiallagen (46-50) gebildet sind, die an Verbindungsabschnitten (52-58) miteinander verbunden sind, wobei die Festigkeit der Verbindungen unterschiedlich ist, so dass zumindest eine der Verbindungen sich bei einem vorbestimmten Innendruck löst während die anderen Verbindungen bestehen bleiben.

13. Luftsack nach Anspruch 7,
**dadurch gekennzeichnet, dass**
zumindest eine der Kammern nicht mit den übrigen Kammern (42, 44) kommuniziert sondern zumindest eine insbesondere mit einem Rückströmventil versehene Einströmöffnung aufweist, um beim Entfalten ein Einströmen von Umgebungsluft zu ermöglichen.
